# EUROPÄISCHE PATENTSCHRIFT

(11) **EP 3 524 738 B1**
(45) Veröffentlichungstag und Bekanntmachung des Hinweises auf die Patenterteilung: **01.04.2020**
(21) Anmeldenummer: 18155915.4
(22) Anmeldetag: 09.02.2018
(51) Int. Cl.: E03B 7/09, E03C 1/02, E03D 1/012, H02G 3/08

(54) **BEHÄLTNIS ZUM ABGEDICHTETEN EINBAU IN EINE WAND**
CONTAINER FOR SEALED INSTALLATION INTO A WALL
CONTENANT POUR INSTALLATION SCELLÉE DANS UN MUR

(43) Veröffentlichungstag der Anmeldung: 14.08.2019
(73) Patentinhaber: Geberit International AG, 8645 Jona (CH)
(72) Erfinder: Krähenbühl, Simon, 8640 Rapperswil (CH)
(74) Vertreter: König Szynka Tilmann von Renesse Patentanwälte Partnerschaft mbB

(56) Entgegenhaltungen:
- EP-A1- 2 441 895
- EP-A1- 2 821 557
- EP-A1- 3 222 786

## Beschreibung

Die vorliegende Erfindung bezieht sich auf ein Behältnis, das in eine Wand, z. B. eine Badezimmerwand, abgedichtet eingebaut werden soll.

Das Behältnis ist im Rahmen dieser Darstellung allgemein gemeint und kann z. B. als Ablage dienen oder eine Ablage aufnehmen. Für den oben genannten Fall einer Badezimmerwand könnten das Hygieneartikel, Kosmetikartikel, Handtücher etc. sein. Es kann sich aber auch um z. B. ein Behältnis zur Aufnahme eines Unterputzspülkastens, eines WCs oder eines anderen Wasserabgabegeräts, z. B. eines Spülventils, handeln. Insbesondere kann das Behältnis dabei einen Leckageschutz für das Wasserabgabegerät bilden.

WCs haben nämlich definitionsgemäß eine Wasserspülung und die häufigste Lösung beinhaltet einen Spülkasten zur Bevorratung eines ausreichenden Spülwasservolumens. Moderne Spülkästen bestehen in der Regel im Wesentlichen aus einem spritzgegossenen oder blasgeformten Kunststofftank und in der Vergangenheit waren auch keramische Spülkästen gebräuchlich. Unabhängig von der Materialwahl besteht bei Spülkästen immer ein gewisses kleines Restrisiko einer Leckage. Bspw. könnte eine kleine Beschädigung des Spülkastens auf der Baustelle oder während des Montagevorgangs auftreten und unentdeckt bleiben, was insbesondere bei nach Einbau in eine Raumwand nicht mehr sichtbarem Unterputzspülkästen eine verborgene Wasserleckage zur Folge hätte.

Ähnliche Probleme stellen sich dementsprechend auch bei anderen Unterputz-Wasserabgabegeräten, z. B. Unterputzspülventilen, also Ventilen für eine Spülkasten-lose WC-Spülung, Unterputzarmaturen und Unterputzmischventilen.

Die beschriebenen unentdeckten Leckagen sind vor allem für Holzhäuser oder Holzelemente in Häusern hochproblematisch und können zu erheblichen Schäden führen. Daher sind zusätzliche Schutzmaßnahmen je nach betroffenem Land erwünscht oder sogar vorgeschrieben.

Das erfindungsgemäße Behältnis kann statt zur Aufnahme eines Wasserabgabegeräts aber wie gesagt auch z. B. in der Art eines Möbels zur Aufbewahrung von verschiedenen benutzerseitig ein- und auszuräumenden Gegenständen dienen, z. B. in einem Duschbereich eines Badezimmers. Es kann dazu Tragböden, etwa Einlegeböden, aufweisen. Auch solche Behältnisse zum abgedichteten Wandeinbau sind an sich bekannt.

Schließlich kann das Behältnis auch Teil eines Wasserablaufs sein, insbesondere in einem Badezimmer, wobei Wandabläufe und Bodenabläufe in Betracht kommen. Der Begriff der "Wand" ist im Rahmen dieser Erfindung nämlich auch auf einen Boden oder eine Decke zu beziehen, wobei eine vertikale Wand (im Gegensatz zum Boden und zur Decke) bevorzugt ist. In Wand- oder Bodenabläufen gibt es in der Regel ein Behältnis zur Aufnahme des ablaufenden Wassers, das ebenfalls in einer zur Wand abgedichteten Weise eingebaut wird.

Die EP 3 222 786 A1 zeigt den Oberbegriff des Anspruchs 1 in Form eines Wandeinbaukastens für eine Mischarmatur einer Dusche. Dabei ist ein Steckrahmen im Sinn einer Nut-Feder-Verbindung in eine Aufnahme einer doppelwandigen Kastenwand eingesteckt und darin verschiebbar, um eine variable Einstecktiefe und damit einen Ausgleich bei der Montage des Kastens in der Wand zu ermöglichen. Außerdem wird verwiesen auf die EP 2 441 895 A1 mit einem kastenartigen Element in einer Wand über einem Spülkasten, wobei ein rahmenartiges Element verschiebbar in dem kastenartigen Element angeordnet ist und damit ein bündiger Einbau sichergestellt werden kann. Außerdem ist die EP 2 821 557 A1 mit einem Leckageschutzkasten für einen Toilettenspülkasten zu nennen.

Der Erfindung liegt die Aufgabe zugrunde, ein eingangs beschriebenes Behältnis hinsichtlich seiner praktischen Eigenschaften weiterzubilden.

Gelöst wird diese Aufgabe durch ein Behältnis zum abgedichteten Einbau in eine Wand, welches Behältnis aufweist: einen in Bezug auf eine eingebaute Position nach vorne offenen oder zu öffnenden und nach hinten und den übrigen Seiten geschlossenen Kasten, und einen die Öffnung an der Vorderseite umlaufenden Rahmen, wobei der Rahmen über eine Verbindungswand mit dem Kasten verbunden ist und gegenüber der Öffnung in der Richtung senkrecht zu der Öffnung in unterschiedlichem Maß versetzt montiert werden kann, dadurch gekennzeichnet, dass die Verbindungswand bezüglich einer Bewegungsrichtung senkrecht zu der Öffnung nachgiebig ist, wobei die Verbindungswand aus einem flexiblen Material, vorzugsweise aus einer Folie, oder einem balgähnlichen Material besteht, und eine Verwendung des Behältnisses zum Einbau in eine Wand.

Das erfindungsgemäße Behältnis weist mindestens drei Grundelemente auf, nämlich einen Kasten, einen Rahmen und eine diese verbindende "Verbindungs"-Wand. Der Kasten weist eine Öffnung auf, wobei die entsprechende Seite des Kastens hier als Vorderseite bezeichnet wird. Das ist die nach Einbau in die Wand zugängliche Seite, die vorzugsweise im Wesentlichen parallel zur Wandebene liegt und ebenfalls vorzugsweise bündig zur Wand eingebaut werden kann. Im Übrigen ist der Kasten geschlossen, nämlich an der entgegengesetzten Seite, also nach hinten, und an den übrigen Seiten, also rechts, links, oben und unten, wobei es auf die Unterscheidung dazwischen an dieser Stelle nicht ankommt. Der Kasten ist also einseitig offen und soll so eingebaut werden, dass diese Öffnung zugänglich ist.

Vorzugsweise besteht der Kasten aus einem für die im Folgenden noch beschriebenen Anwendungen ausreichend formstabilen Material. Für z. B. reine Leckageschutzanwendungen kommt es dabei eher auf Dichtigkeit an, soll der Kasten allerdings zumindest so formstabil sein, dass er ohne weitere Maßnahmen seine eigene Kastenform beibehält. Für z. B. Ablageanwendungen und insbesondere mit einer weitergehenden Verkleidung seiner Innenseite ist eine gewisse mechanische Belastbarkeit wichtiger und ist in diesem Sinn ein steiferes Material bevorzugt, etwa ein Kunststoff mit einer ausreichenden Wandstärke oder Metallblech.

Der Rahmen soll in einer die Öffnung des Kastens umlaufenden Weise vorgesehen sein, ist allerdings nicht direkt an der Öffnung vorgesehen, sondern von dieser etwas versetzt und durch die erwähnte Wand mit dem Kasten verbunden. Die Bezeichnung "umlaufend" meint also, dass durch den Rahmen hindurch die Öffnung zugänglich ist. Vorzugsweise verläuft der Rahmen in einer Projektion (vorzugsweise senkrecht zu einer durch die Öffnung definierten Ebene) im Wesentlichen um den Rand der Öffnung herum. Der Rahmen soll nach dem Einbau an der Wand, in die das Behältnis eingebaut ist, vorgesehen sein, und zwar vorzugsweise, aber nicht zwingend bündig dazu. Der Rahmen kann also insbesondere noch etwas in den Raum vor der Wand vorstehen.

Der Rahmen soll formstabil ausgeführt sein, womit er sich besonders zur Montage an der z. B. Badezimmerwand eignet und im Besonderen bei der Montage auch als Anlage oder zur Festlegung einer Referenzebene benutzt werden kann. Formstabil bedeutet dabei, dass der Rahmen seine z. B. rechteckige Form auch bei Beaufschlagung durch z. B. übliche Körperkräfte eines Handwerkers während der Montage beibehält. Er kann also z. B. aus einem formstabilen Kunststoffmaterial, etwa einem Spritzgussteil, oder aus Metallblech bestehen.

Der Rahmen ist vorzugsweise geschlossen, hat also keine Lücke, und weiterhin vorzugsweise rechteckig mit eventuell etwas abgerundeten Ecken. Er kann in einer Schnittebene senkrecht zur Wand bzw. Öffnung ein flaches Profil mit einer längeren Erstreckung senkrecht zur Wand und Öffnung als parallel dazu haben.

Die (den Rahmen und den Kasten verbindende) Verbindungswand sorgt für eine dichte Verbindung dazwischen, sodass, da der Kasten ebenfalls dicht ausgebildet ist, das gesamte Behältnis schlussendlich im eingebauten Zustand hinsichtlich eines Durchtritts von Feuchtigkeit im Wesentlichen dicht ist. Natürlich kann der Kasten oder können auch andere Elemente des Behältnisses vor dem Einbau Montageöffnungen aufweisen, etwa Löcher für Schrauben, die dann bei der Montage dicht verschlossen werden. Die Verbindungswand soll hinsichtlich der Richtung senkrecht zu der Öffnung nachgiebig sein, sodass also der Abstand zwischen dem Rahmen und dem Kasten veränderlich ist. Diese Richtung ist dabei nur als ungefähre Angabe zu verstehen, weil die Öffnung nicht zwingend präzise eine Ebene definieren muss. Es geht aber darum, den Abstand bei dem Einbau anpassen zu können und damit z. B. auf verschiedene Einbaubedingungen, etwa unterschiedliche Wandstärken, Wandverkleidungsstärken, Positionen von Montagemöglichkeiten und anderes, reagieren zu können.

Dazu besteht die Verbindungswand erfindungsgemäß aus einem flexiblen Material, also einem hinsichtlich seiner Form veränderlichen Material wie z. B. einer Folie, einem dichten Gewebe oder anderen Textil, oder einer Kombination, etwa einem folienbeschichteten Gewebe, einer mit Vlies beschichteten Folie oder gewebeverstärkten Folie etc. Es könnte sich bei der Verbindungswand auch um eine balgähnliche und in anderen Richtungen nicht zwingend nachgiebige Lösung handeln. Insgesamt bietet jedenfalls die Nachgiebigkeit eine Anpassbarkeit kombiniert mit einem Rahmen, der seinerseits formstabil ist.

Im Regelfall wird es nötig sein, auch hinsichtlich der Verbindung zwischen dem Rahmen und der Wand eine Dichtung vorzusehen, insbesondere wenn der Rahmen bündig verbaut werden soll. Daher weist das erfindungsgemäße Behältnis vorzugsweise auch eine solche Dichtung auf. Diese kann dazu ausgelegt sein, von dem Rahmen aus in der Wandebene und damit vorzugsweise im Wesentlichen in der Ebene der vorderseitigen Öffnung des Kastens nach außen wegzustehen. Entweder hat die Dichtung diese Position schon vor der Montage oder sie wird durch Anbringen an dem Rahmen in diese Position gebracht oder sie ist an dem Rahmen vor der Montage angebracht, aber nach innen gerichtet und kann dann bei der Montage durch Umlegen nach außen in jene Lage gebracht werden. Dementsprechend ist die Dichtung vorzugsweise flexibel und besteht z. B. aus einer Folie, etwa einer vliesbeschichten Folie.

Die Dichtung kann schon bei der Herstellung, z. B. von außen, an dem Rahmen angebracht, z. B. angeklebt, sein. "Außen" bezieht sich dabei auf eine Seite des Rahmens, die entgegengesetzt liegt zu der bezüglich der durch den Rahmen definierten Öffnung nach innen weisenden Seite. Sie kann auch an der vorderern Rahmenkante angebracht sein, etwa durch Anspritzen.

Eine weitere bevorzugte Ausgestaltung sieht zusätzliche, relativ zur Dichtung starre Leisten an dem Rahmen vor, die jedenfalls in der montierten Position von diesem nach außen wegstehen. Diese Leisten können umlegbar sein und dementsprechend zuvor z. B. nach innen weggestanden haben und erst während der Montage nach außen umgelegt werden. Dies kann z. B. dadurch erfolgen, dass sie auf die bereits erwähnte Dichtung aufgebracht sind, z. B. durch Aufkleben. Sie dienen dazu, eine flexible Dichtung gleichmäßig und über einen möglichst großen Teil ihrer den Rahmen umlaufenden Länge andrücken, ankleben oder anderweitig in die endgültige dichtende Position an der Wand anbringen zu können. Dazu erfassen die Leisten vorzugsweise jeweils mindestens 80 %, vorzugsweise mindestens 90 % oder 95 % der Länge einer rechteckigen Kante des Rahmens, vgl. das Ausführungsbeispiel.

Auch wenn die Dichtung separat und nicht als integrierter Teil des erfindungsgemäßen Behältnisses vorgesehen ist und angebracht wird, können solche Leisten hilfreich sein. Sie können dementsprechend im nicht montierten Zustand des Behältnisses als separate lose Teile vorliegen, um dann angebracht, etwa aufgeklebt, zu werden. Im Übrigen können die Leisten als Sonderfall auch einen umlaufenden Flansch bilden, der den Rahmen umgibt, dabei von vorn auf der Dichtung aufliegt und somit eine umlaufende gute Anlage einer Dichtung auf der Wand gewährleistet. Dann fällt das zuvor erwähnte Umlegen weg und der Flansch ist entweder im nicht montierten Zustand bereits am Rahmen angebracht oder als separates Teil aufzusetzen.

Der Abstand zwischen dem Rahmen und dem Kasten kann vorteilhafterweise durch eine Verstellvorrichtung eingestellt werden, die dementsprechend senkrecht zur Wandebene bzw. Öffnung an der Vorderseite des Kastens wirkt (wie immer nur ungefähr gemeint). Z. B. kann dabei zumindest eine Gewindestange mit einem Gegengewinde zum Einsatz kommen. Im Ausführungsbeispiel sind dies Gewindestangen in den Vierecken eines Vierecks. Der Monteur kann damit den Abstand genau einstellen und auch festlegen, z. B. nach Montage des Kastens und im Hinblick auf eine bestimmte Position des Rahmens relativ zur Wandvorderseite (bündig oder mit definiertem Überstand).

Eine weitere bevorzugte Ausgestaltung sieht eine vorgeprägte Falte in der aus flexiblem Material bestehenden Wand zwischen dem Rahmen und dem Kasten vor. Z. B. kann die Falte durch Bügeln vorgeprägt sein. Durch eine solche Falte oder eine Mehrzahl Falten lässt sich das Zusammenschieben dieser Wand bei der Verstellung (ob ohne oder mit Verstellvorrichtung) erleichtern und ein unkontrolliertes Ausbeulen vermeiden.

Das montierte Behältnis und insbesondere der Kasten darin können nach dem Einbau innenseitig passend zur übrigen Wand oder sonst wie beschichtet werden. Z. B. kann eine Fliesenbedeckung der (Sanitär-)Wand auch in das Behältnis hineingezogen werden. Das Behältnis könnte natürlich auch abweichend von der übrigen Wandoberfläche verfliest oder anderweitig beschichtet werden.

Eine bevorzugte Nutzung liegt neben dem Leckageschutz für verschiedene Wasserabgabegeräte vor allem in einer Ablagebox. Dazu kann das z. B. innen verflieste Behältnis an sich dienen und Shampooflaschen und andere Hygiene- oder Körperpflegeartikel, Kosmetik, Wäschestücke oder Ähnliches aufnehmen. Dabei kann auch eine zusätzliche Ablage eingebaut werden oder gar ein eigenständiger möbelartiger Einschub in den Behälter eingesetzt werden.

Im Folgenden wird die Erfindung anhand eines Ausführungsbeispiels näher beschrieben.
- Fig. 1 und 2: zeigen ein erfindungsgemäßes Behältnis in einem vertikalen und senkrecht zur Wand genommenen Schnitt, und zwar in Fig. 1 mit minimaler und in Fig. 2 mit maximaler Abstandseinstellung zwischen Rahmen und Kasten;
- Fig. 3: zeigt eine Frontansicht des Behältnisses aus den Fig. 1 und 2 mit Blickrichtung auf die Wand und Darstellung der Schnittebene A-A der Fig. 1 und 2;
- Fig. 4 und 5: zeigen das Behältnis in perspektivischer Darstellung von oben vorne rechts, und zwar in Fig. 4 gemäß Fig. 1 und in Fig. 5 gemäß Fig. 2.

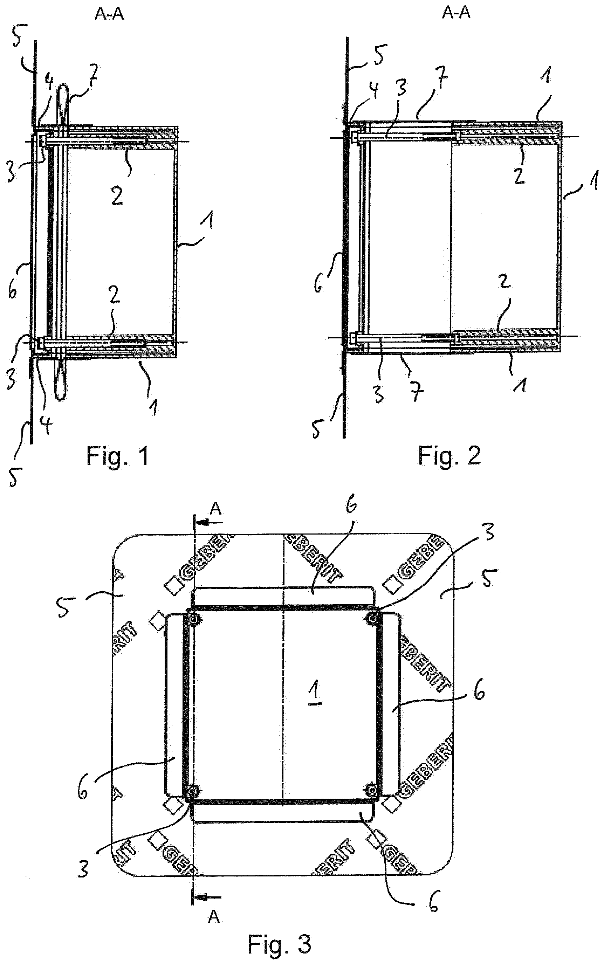

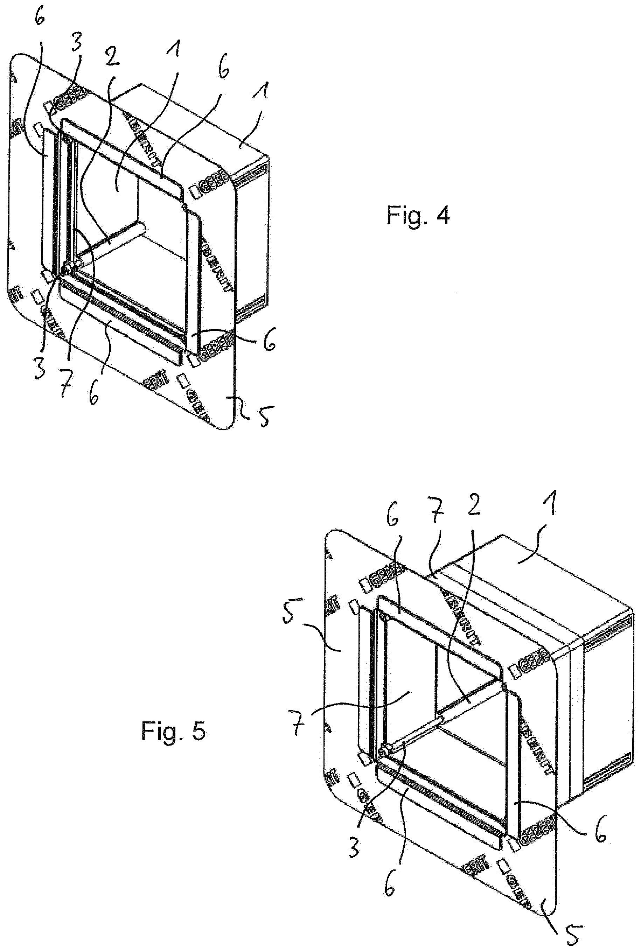

Die Figuren zeigen einen aus einem starren Kunststoff gespritzten oder tiefgezogenen oder aus Blech geschweißten oder tiefgezogenen Kasten 1 mit einer insbesondere in Fig. 3 sichtbaren quadratischen Grundfläche und vier davon nach vorn abstehenden und miteinander verbundenen Wänden. In den Ecken zwischen diesen Wänden sind in Fig. 4 und in Fig. 1 und 2 (dort im Schnitt) gut sichtbare Rohrstücke 2 angebracht (oder im Spritzguss integriert), die ein Innengewinde aufweisen und in die eine jeweilige Gewindestange 3 eingreift. Ein Kopf jeder Gewindestange 3 ist dabei gehalten in einer Öse eines ebenfalls quadratischen Rahmens 4, der gemäß den Fig. 1 und 2 ein flaches Profil aufweist mit längerer Profilrichtung senkrecht zur Wand und im Übrigen als geschlossener Rahmen die Außenkontur des quadratischen Grundrisses des Kastens 1 wieder aufnimmt.

Der Rahmen 4 ist ein spritzgegossenes Kunststoffteil, an das bei seiner Herstellung eine in den Figuren gut sichtbare Foliendichtung 5 an der (in den Fig. 1 und 2 nach links weisenden) Vorderkante des Rahmens 4 angespritzt ist. Die Foliendichtung 5 ist also insgesamt flach und muss nicht tiefgezogen werden. Alternativ könnte sie um einen kleinen Streckenabschnitt an die Außenkante des Rahmens angepasst tiefgezogen und dann an den Rahmen von außen angeklebt sein, etwa wenn dieser aus Blech gefertigt sein soll.

Die Foliendichtung 5 besteht aus einer bevliesten Kunststofffolie mit einer gewissen Dehnbarkeit, womit sie gut und falten- und blasenfrei auf eine Badezimmerwand aufgeklebt werden kann.

Zur Verbesserung der Stabilität der Foliendichtung 5 und der Anlage an der Wand weist diese an den geraden Kanten des quadratischen Rahmens 4 und zu dessen Flachprofil rechtwinklig und außen daran anschließende Leisten 6 auf, die die Fig. 3 bis 5 am deutlichsten zeigen und die lediglich die Ecken des Rahmens aussparen. Sie sind getrennt von dem Rahmen 4 angeführt und können bei dem erwähnten (An-)Spritzprozess mit gespritzt werden. Daher sind sie zusammen mit der Foliendichtung 5 im Transport- und Auslieferungszustand nach innen in die Öffnung des Rahmens 4 eingeklappt und können in dieser Position z. B. durch einen Bauschutzdeckel von vorn geschützt sein. Nach Entfernung des Bauschutzdeckels kann dann die Foliendichtung 4 mit den Leisten 6 jeweils nach außen umgelegt werden, womit die in den Figuren dargestellte Situation entsteht.

In dieser Situation sorgen sie für eine flache faltenfreie Anlage der Foliendichtung 5 mindestens in einem an den Rahmen 4 anschließenden Bereich und erleichtern auch das Andrücken der Foliendichtung 5 an die Wand. Von den Leisten 6 ausgehend kann der Monteur dann die Foliendichtung nach außen glattstreichen, wobei eine gewisse Elastizität der Foliendichtung 5 hilfreich ist. Auf diese Weise kann also der Rahmen 4 mit Hilfe der Foliendichtung 5 fest und dicht mit der Wand verbunden werden.

Der im Verhältnis zu der Foliendichtung 5 und der Verbindungswand 7 relativ starre Rahmen 4 erleichtert dabei dem Monteur die Arbeit, weil er eine definierte Bezugsgeometrie und insbesondere Bezugskanten vorgibt. Er fördert ferner einen sauberen und geometrietreuen Verlauf der Foliendichtung 5. Auch kann er bei entsprechender Ausgestaltung eine Anschlagkante zum Verlegen von Fliesen oder Platten oder zum Verputzen bilden.

Gleichzeitig erlaubt die Erfindung eine gewisse Variabilität des Abstandes zwischen dem Rahmen 4 und dem Kasten 1 in einer zu der Wand und damit auch zu der vorderseitigen Öffnung in dem Kasten 1 senkrechten Richtung, also in den Fig. 1 und 2 horizontal und in Fig. 3 senkrecht auf der Zeichenebene. Dazu ist eine Verbindungswand 7 vorgesehen, die in Fig. 1 und 4 gefaltet und dabei maximal zusammengelegt und in Fig. 2 und 5 weitgehend faltenfrei straff gespannt ist. Dementsprechend ändert sich der erwähnte Abstand.

Dazu besteht die Verbindungswand aus einem dichten Kunststofffolienmaterial, das dehnbar sein kann, aber nicht muss, und in ähnlicher Weise wie die Foliendichtung 5 an dem Rahmen 4 und/oder den Seitenwänden des Kastens 1 angespritzt oder von außen oder von innen angeklebt sein kann. Zur Erleichterung des Zusammenfaltens kann das Folienmaterial zusätzlich z. B. durch Bügeln vorgeprägte Falten erhalten, in die es sich in dem in den Fig. 1 und 4 dargestellten Zustand legt. Die Verbindungswand 7 ist dementsprechend Garant für eine dichte Verbindung zwischen dem Rahmen 4 und dem Kasten 1 bei gleichzeitiger Einstellbarkeit des Abstandes dazwischen.

Dieser Abstand wiederum lässt sich mit Hilfe der bereits erwähnten Gewindestangen 3 einstellen, die in die Rohrstücke 2 eingreifen. Die Gewindestangen 3 sind dementsprechend durch Drehen relativ zu den Rohrstücken 2 und damit relativ zu dem Kasten 1 verstellbar. Durch entsprechende Einstellung geben sie entweder eine maximal nach vorn verlegte Position des Rahmens 4 vor, nämlich wenn dieser auf den Gewindestangen 3 gehalten und durch deren Köpfe nach vorn blockiert ist, oder definieren sogar dessen Position, nämlich wenn die Köpfe oder andere Teile der Gewindestangen 3 drehbar, aber axial nicht beliebig verschiebbar mit dem Rahmen 4 gekoppelt sind.

In beiden Fällen kann der Monteur z. B. zunächst den Kasten 1 z. B. an einem aus dem Stand der Technik gut bekannten Montagegestell (wie es etwa zur Montage von Waschbecken, Hänge-WCs und Ähnlichem bekannt ist) anbringen. Dazu können z. B. von innen durch die Seitenwände des Kastens 1 in abgedichteter Weise Schrauben geführt werden oder kann der Kasten 1 z. B. mit äußeren Leisten 6 oder Nuten formschlüssig in entsprechende Montagestrukturen an dem Montagegestell (oder einer anderen Einrichtung der Wand) eingeschoben oder sonstwie formschlüssig befestigt werden.

Dies kann auch noch vor der Herstellung der eigentlichen Wand, etwa einer Trockenbauwand bei der Herstellung oder Renovierung eines Badezimmers, geschehen. Dementsprechend steht zu diesem Zeitpunkt nicht unbedingt fest, wie stark (in der Richtung senkrecht zur Wand) der Wandaufbau insgesamt wird, etwa unter Berücksichtigung einer Fliesen- oder Natursteinverkleidung.

Selbst wenn, ist es von großem Vorteil, durch die Variabilität des erfindungsgemäßen Behältnisses auf diese Stärke nicht schon bei der Montage des Kastens 1 genau Rücksicht nehmen zu müssen. Vielmehr kann der Monteur den Rahmen 4 mit Hilfe der Gewindestangen 3 auf eine gewünschte Position einstellen und damit z. B. eine bündige Anlage mit der Vorderseite der Wand, etwa den Fliesen, gewährleisten.

Bei der dargestellten Variante ist hingegen vorgesehen, die Bündigkeit zu derjenigen Wandoberfläche herzustellen, auf die die Fliesen oder Natursteinplatten aufgebracht werden, wobei dann die Wandbedeckung, also etwa die Fliesen oder Natursteinplatten, nicht nur auf die Wand von außen aufgebracht werden, sondern auch in das Behältnis hinein und damit um die Vorderkante des Rahmens 4 herum. Bei nicht zu großer Ausdehnung der Verbindungswand in der Richtung senkrecht zur (Badezimmer-)Wand stören dabei die Flexibilität und möglicherweise Elastizität der Verbindungswand nicht, sondern kann diese überbrückt werden. Natürlich kann das Behältnis auch anderweitig ausgekleidet werden und kann der Rahmen 4 gegenüber der Foliendichtung 5 etwas vorne überstehen und im eingebauten und fertigen Zustand als bündige Anlagekante für z. B. Fliesen sichtbar sein.

Im fertigen Zustand kann z. B. eine Wandnische zum Abstellen von z. B. Shampooflaschen oder zum Ablegen von Handtüchern im Duschbereich entstanden sein. Man kann natürlich auch noch regalähnliche Ablageboards einbauen oder sogar in das wasserdicht eingebaute Behältnis (ein z. B. weniger als Wandbestandteil, sondern als Möbel gestaltetes, auch kastenförmiges) Element mit entsprechenden Funktionen einschieben. Außerdem könnte das Behältnis auch zur leckagesicheren Unterbringung von Armaturen, Spülkästen oder ähnlichen Elementen dienen, was mit der Funktion als Stauraum oder Ablagebox kombiniert sein kann.

## Patentansprüche

1. Behältnis zum abgedichteten Einbau in eine Wand, welches Behältnis aufweist:
einen in Bezug auf eine eingebaute Position nach vorne offenen oder zu öffnenden und nach hinten und den übrigen Seiten geschlossenen Kasten (1), und
einen die Öffnung an der Vorderseite umlaufenden Rahmen (4),
wobei der Rahmen (4) über eine Verbindungswand (7) mit dem Kasten (1) verbunden ist und gegenüber der Öffnung in der Richtung senkrecht zu der Öffnung in unterschiedlichem Maß versetzt montiert werden kann,
**dadurch gekennzeichnet, dass** die Verbindungswand (7) bezüglich einer Bewegungsrichtung senkrecht zu der Öffnung nachgiebig ist, wobei die Verbindungswand (7) aus einem flexiblen Material, vorzugsweise aus einer Folie, oder einem balgähnlichen Material besteht.

2. Behältnis nach Anspruch 1, welches ferner eine den Rahmen (4) umlaufende und von dem Rahmen (4) in einer Ebene der vorderseitigen Öffnung nach außen wegstehende oder durch Umlegen in diese Lage bringbare, vorzugsweise flexible Dichtung (5) aufweist.

3. Behältnis nach Anspruch 1 oder 2, das ferner von dem Rahmen (4) in einer Ebene der vorderseitigen Öffnung nach außen wegstehende oder durch Umlegen in diese Position bringbare starre Leisten (6) aufweist.

4. Behältnis nach einem der vorstehenden Ansprüche, welches ferner eine in der Bewegungsrichtung senkrecht zu der Vorderseite wirksame Verstellvorrichtung (2, 3) zum Verstellen eines Abstandes zwischen dem Rahmen (4) und dem Kasten (1) aufweist.

5. Behältnis nach Anspruch 4, bei dem die Verstellvorrichtung (2, 3) mindestens eine Gewindestange (3) und ein Gegengewinde (2) zum Eingriff damit aufweist.

6. Behältnis nach Anspruch 3, optional auch in Verbindung mit Anspruch 4 oder 5, bei welchem die Verbindungswand (7) aus dem flexiblen Material mindestens eine vorgeprägte, vorzugsweise gebügelte Falte zum Erleichtern eines Zusammenschiebens in der Bewegungsrichtung senkrecht zu der Vorderseite aufweist.

7. Behältnis nach Anspruch 2, optional in Verbindung mit einem der Ansprüche 3 bis 6, bei dem der Rahmen (4) aus einem spritzbaren Kunststoff besteht und die Dichtung (5) an den Rahmen (4) angespritzt ist.

8. Behältnis nach einem der vorstehenden Ansprüche, bei dem die Verbindungswand (7) an den Rahmen (4) und/oder den Kasten (1) angespritzt ist.

9. Behältnis nach einem der vorstehenden Ansprüche, bei dem der Kasten (1) quaderförmig und der Rahmen (4) viereckig mit vorzugsweise der Umrandung der vorderseitigen Öffnung des Kastens (1) entsprechendem Format ist.

10. Verwendung eines Behältnisses nach einem der vorstehenden Ansprüche zum Einbau in eine Wand, vorzugsweise eine Vorwand oder Trockenbauwand.

11. Verwendung nach Anspruch 10, bei der die Wand eine Sanitärwand und vorzugsweise an einer Dusche vorgesehen ist.

12. Verwendung nach Anspruch 10 oder 11, bei welcher das Behältnis innen verfliest wird und in dem verfliesten Bereich durch die Öffnung zugänglich ist.

13. Verwendung nach einem der Ansprüche 10 bis 12, bei welcher das Behältnis als Ablage oder zur Aufnahme einer Ablage, vorzugsweise eines Ablagebords oder Regals, verwendet wird.

14. Verwendung nach einem der Ansprüche 10 bis 13, bei welcher das Behältnis als Leckageschutzeinrichtung für ein Wasserabgabegerät, insbesondere für einen Spülkasten, ein Spülventil, eine Armatur und/oder ein Mischventil verwendet wird.

## Claims

1. A container for a sealed mounting into a wall, which container comprises:
a box (1) being open or to be opened to the front and closed to the rear side and the other sides in relation to a mounted position and
a frame (4) enclosing an opening at the front-side,
wherein the frame (4) is connected to the box (1) by a connection wall (7) and can be mounted in different interspaces relative to the opening and the direction perpendicular to the opening,
**characterized in that** the connection wall (7) is conforming with regard to a movement direction perpendicular to the opening, wherein the connection wall (7) consists of a flexible material, preferably of a foil or a bellows-like material.

2. The container of claim 1, further comprising a sealing (5), preferably being flexible, enclosing the frame (4) and projecting outwardly from the frame (4) in a plane of the front-side opening or adapted to be folded in this position.

3. A container of claim 1 or 2, further comprising rigid ledgers (6) projecting outwardly from the frame (4) in a plane of the front-side opening or adapted to be folded into this position.

4. The container of one of the preceding claims, further comprising adjustment means (2, 3) effective in the movement direction perpendicular to the front-side and for adjusting a distance between the frame (4) and the box (1).

5. The container of claim 4, wherein the adjustment means (2, 3) comprise at least a threaded rod (3) and a complementary thread (2) for engagement therewith.

6. The container of claim 3, optionally also in combination with claim 4 or 5, wherein the connection wall (7) made from the flexible material comprises at least one preformed, preferably ironed pleat for alleviating the shifting-together / compression in the movement direction perpendicular to the front side.

7. The container of claim 2, optionally in combination with one of claims 3 to 6, wherein the frame (4) consists of injection-moldable plastics and the sealing (5) is injection-molded onto the frame (4).

8. The container of one of the preceding claims, wherein the connection wall (7) is injection-molded onto the frame (4) and/or onto the box (1).

9. The container of one of the preceding claims, wherein the box (1) is ashlar-formed and the frame (4) is quadrangular and preferably has a format corresponding to the contour of the front-side opening of the box (1).

10. A use of the container of one of the preceding claims, for mounting into a wall, preferably a pre-wall or a dry wall.

11. A use of claim 10, wherein the wall is a sanitary wall and preferably is provided at a shower.

12. The use of claim 10 or 11, wherein the container is tiled inwardly and is accessible in the tiled area via the opening.

13. The use of one of claims 10 to 12, wherein the container is used as a shelf or for receiving a shelf, preferably of a shelfboard or a rack.

14. The use of one of claims 10 to 13, wherein the container is used as a leakage protection device for a water dispensing apparatus, in particular for a cistern, a flushing valve, a mounting and/or a mixing valve.

## Revendications

1. Enceinte destinée à être encastrée de façon étanche dans une paroi, laquelle enceinte présente:
un caisson (1) qui, eu égard à une position encastrée, est ouvert ou est destiné à être ouvert sur l'avant et est fermé sur l'arrière et sur ses autres faces, et
un cadre (4) entourant l'ouverture sur la face avant;
ledit cadre (4) étant relié au caisson (1) par une paroi de liaison (7) et pouvant être monté réglable dans différentes mesures par rapport à l'ouverture, dans un sens perpendiculaire à ladite ouverture,
**caractérisé en ce que** la paroi de liaison (7) est souple eu égard à un sens de déplacement perpendiculaire à l'ouverture, ladite paroi de liaison (7) se composant d'un matériau flexible, de préférence une feuille de matériau, ou d'un matériau formant soufflet.

2. Enceinte selon la revendication 1, présentant en outre un joint (5) de préférence flexible, qui entoure le cadre (4) en s'étendant vers l'extérieur à partir du cadre (4) dans un plan de l'ouverture avant ou qui peut être mis dans cette position par rabattement.

3. Enceinte selon la revendication 1 ou 2, présentant en outre des baguettes (6) rigides qui s'étendent vers l'extérieur à partir du cadre (4) dans un plan de l'ouverture avant ou qui peuvent être mises dans cette position par rabattement.

4. Enceinte selon l'une des revendications précédentes, présentant en outre un dispositif de réglage (2, 3) effectif dans le sens du déplacement perpendiculaire à la face avant afin de régler un écart entre le cadre (4) et le caisson (1).

5. Enceinte selon la revendication 4, dans laquelle le dispositif de réglage (2, 3) présente au moins une tige filetée (3) et un élément taraudé (2) coopérant.

6. Enceinte selon la revendication 3, éventuellement en lien avec la revendication 4 ou 5, dans laquelle la paroi de liaison (7) en matériau flexible présente au moins un pli prémarqué, de préférence par repassage, facilitant un déplacement mutuel dans le sens du déplacement perpendiculaire à la face avant.

7. Enceinte selon la revendication 2, éventuellement en lien avec l'une des revendications 3 à 6, dans laquelle le cadre (4) se compose d'un plastique susceptible d'être moulé par injection et le joint (5) est surmoulé sur le cadre (4).

8. Enceinte selon l'une des revendications précédentes, dans laquelle la paroi de liaison (7) est surmoulée sur le cadre (4) et/ou sur le caisson (1).

9. Enceinte selon l'une des revendications précédentes, dans laquelle le caisson (1) est en forme de parallélépipède rectangle et le cadre (4) est carré et présente de préférence un format correspondant au contour de l'ouverture avant du caisson (1).

10. Utilisation d'une enceinte selon l'une des revendications précédentes, destinée à être encastrée dans une paroi, de préférence un cadre de montage ou une cloison sèche.

11. Utilisation selon la revendication 10, dans laquelle la paroi est une paroi de sanitaires et est de préférence prévue dans une douche.

12. Utilisation selon la revendication 10 ou 11, dans laquelle l'enceinte reçoit un carrelage sur l'intérieur et est accessible par l'ouverture dans sa zone carrelée.

13. Utilisation selon l'une des revendications 10 à 12, dans laquelle l'enceinte sert de réceptacle ou abrite un réceptacle, de préférence une ou plusieurs étagères.

14. Utilisation selon l'une des revendications 10 à 13, dans laquelle l'enceinte sert de protection contre les fuites pour un dispositif de distribution d'eau, notamment pour une citerne de toilettes, une chasse d'eau, un article de robinetterie et/ou un robinet mélangeur.
